(19) Europäisches Patentamt
European Patent Office
Office européen des brevets

(11) Numéro de publication: **0 099 902**
**B1**

(12)
# FASCICULE DE BREVET EUROPEEN

(45) Date de publication du fascicule du brevet: **06.11.85**

(51) Int. Cl.⁴: **C 08 L 67/04**, H 01 B 3/42, C 09 J 7/00

(21) Numéro de dépôt: **83900350.6**

(22) Date de dépôt: **20.01.83**

(86) Numéro de dépôt international: **PCT/FR 83/00014**

(87) Numéro de publication internationale: **WO 83/02451 (21.07.83** Gazette **83/17)**

(54) **RUBAN THERMORETRACTABLE A BASE DE POLYCAPROLACTONE, SON PROCEDE DE PREPARATION ET SON APPLICATION DANS LE DOMAINE DU CONDITIONNEMENT, NOTAMMENT DANS L'ISOLATION DE CONDUCTEURS ELECTRIQUES.**

(30) Priorité: **20.01.82 FR 8200857**

(43) Date de publication de la demande: **08.02.84 Bulletin 84/6**

(45) Mention de la délivrance du brevet: ***06.11.85 Bulletin 85/45***

(84) Etats contractants désignés: **AT BE CH DE FR GB LI LU NL SE**

(56) Documents cités:
**GB - A - 1 416 144**
**US - A - 4 124 572**

**Chemical Abstracts, Volume 80, No. 4, 28 January 1974, (Columbus Ohio, US), JP, A, 7220244 (TORAY INDUSTRIES INC.), 28 September 1972, see page 35, abstract 156602**

(73) Titulaire: **LABORATOIRES D'HYGIENE ET DE DIETETIQUE L.H.D. Société Anonyme dite:, 38 avenue *Hoche, F-75008 Paris (FR)***

(72) Inventeur: **GROUILLER, Hervé, rue d'Aval à Chevrey, F-21700 Arcenant (FR)**

(74) Mandataire: **Combe, André et al, CABINET BEAU DE LOMENIE 55 rue d'Amsterdam, F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 099 902 B1

ACTORUM AG

## Description

La présente invention concerne, en tant que produit industriel, un ruban thermorétractable utile dans le conditionnement de divers articles, notamment comme moyen isolant ou moyen de liaison. Ce produit est constitué par une association de polycaprolactone avec une autre substance polymère. L'invention concerne également le procédé de préparation de ce produit et son application dans le domaine du conditionnement, notamment pour l'isolation de conducteurs électriques et pour la réalisation de liens ou joints.

On sait que la polycaprolactone est un polymère qui présente à la température ambiante une grande résistance à la flexion et un module d'élasticité élevé, mais qui a l'inconvénient, à partir de 50° C, de devenir mou et très collant. Si on chauffe la polycaprolactone en feuille à une température supérieure à environ 50° C, elle perd rapidement sa résistance mécanique et son élasticité, et elle ne peut même pas supporter son propre poids.

L'objet de la présente invention résulte des travaux de la titulaire relatifs à des compositions thermoplastiques ayant une tenue à la chaleur supérieure à celle de la polycaprolactone, en vue de préparer des structures orthopédiques de contention.

Dans la demande de brevet français N° 82-00854 déposée par la titulaire le même jour que la présente invention est écrit un procédé de préparation d'une substance thermoplastique de polycaprolactone (en abrégé PCL) et de polyuréthanne (en abrégé PU), selon lequel la formation du PU à partir d'au moins un polyol et d'au moins un polyisocyanate est effectuée dans la PCL, de façon que le PU soit imbriqué, au fur et à mesure de sa polymérisation, dans le réseau de la PCL. Il est même recommandé que la formation du PU dans la PCL soit effectuée à partir d'un moyen I choisi parmi l'ensemble constitué par les polyisocyanates et leurs mélanges, et d'un moyen II choisi parmi l'ensemble constitué par les polyols et leurs mélanges, les moyens I et II étant tels que, avant réaction de polymérisation, le nombre de groupes NCO libres du moyen I soit sensiblement égal au nombre de groupes OH libres du moyen II, et tels que l'on obtienne une composition renfermant:

– 60 à 100 parties en poids de PCL, et
– 2 à 40 parties en poids de PU,

et pouvant renfermer, le cas échéant, un ou plusieurs adjuvants, notamment au moins un moyen choisi parmi les charges minérales, les colorants et les plastifiants.

Le meilleur mode de mise en œuvre du procédé de la demande précitée comprend:

1) le mélange sous agitation de la PCL avec les moyens I et II, à une température comprise entre 75 et 130° C, pendant 1 à 10 min, pour initier la formation du PU dans le réseau de la PCL, puis

2) la poursuite de la formation du PU dans le réseau de la PCL à une température supérieure ou égale à 60° C (et de préférence comprise entre 60 et 100° C), pendant 10 à 30 min.

La composition obtenue selon le procédé décrit ci-dessus est, après moulage, réalisée pendant ou après le stade 2 susvisé, sous pression, à une température de 60 à 100° C, pendant 10 à 30 min, utile en tant que moyen orthopédique de contention. Selon l'invention, on préconise une autre application de ladite composition dans le domaine du conditionnement et, en particulier, dans l'isolation de conducteurs électriques.

Plus précisément, on préconise selon l'invention un ruban thermorétractable utile dans le conditionnement de divers articles, notamment comme moyen isolant ou moyen de liaison, ledit ruban thermorétractable, qui est réalisé à partir d'une association de polycaprolactone avec une autre substance polymère, étant caractérisé en ce qu'il comprend dans sa composition:

A) 100 parties en poids de polycaprolactone, et

B) 5 à 50 parties en poids d'une substance choisie parmi l'ensemble constitué par les transpolydiènes, le polyuréthanne et leurs mélanges;

et en ce qu'il est thermorétractable et autocollant à une température comprise entre 30 et 80° C, et avantageusement à une température comprise entre 40 et 65° C.

La température de rétractation qui se situe entre 30 et 80° C est fonction de la teneur en moyen B et croît avec ladite teneur.

Le ruban selon l'invention, avant d'être soumis à la thermorétractation, est imperméable vis-à-vis de l'eau et des solvants organiques, est résistant vis-à-vis des réactifs chimiques usuels et présente, à une température inférieure à sa température de rétractation [notamment de la température ambiante (15-20° C) jusqu'à 25° C], une bonne résistance mécanique en ce sens qu'il est rigide et susceptible d'être enroulé sur lui-même sans être autocollant.

Ce ruban, après thermorétractation (la source de chaleur pouvant être de l'air chaud ou de l'eau chaude) est, à une température inférieure à sa température de rétractation (notamment de la température ambiante jusqu'à la température de 25° C), également imperméable à l'eau et aux solvants organiques, résistant vis-à-vis des réactifs chimiques usuels, rigide, résistant au décollement et dépourvu de propriété autocollante, alors qu'au moment de la rétractation à la chaleur il est autocollant.

Le ruban selon l'invention peut renfermer dans sa composition d'autres substances en tant qu'adjuvants. Parmi les adjuvants utilisables, on peut mentionner les charges minérales, telles que ZnO, $CaCO_3$, $TiO_2$, $Ta_2O_5$ et le talc, les plastifiants (notamment l'acide stéarique), les colorants et leurs mélanges.

Comme indiqué dans la demande précitée, on pourra utiliser, le cas échéant,

C) au plus 35 parties en poids de charge minérale (notamment 5 à 35 parties en poids), et/ou

D) au plus 5 parties en poids d'agent plastifiant (notamment 1 à 2 parties en poids).

D'une manière générale, ces adjuvants seront plus spécialement utilisés quand le moyen B sera un trans-polydiène.

Par trans-polydiène (en abrégé TPD), on entend ici un polymère tout trans choisi notamment parmi

l'ensemble des polybutadiène, polyisoprène, polychloroprène et de leurs mélanges. Le TPD préféré selon l'invention est le trans-polychloroprène.

Quand le moyen B est le polyuréthanne ou est un mélange de trans-polydiène et de polyuréthanne, il est important, comme indiqué dans la demande précitée, que la formation du PU à partir des moyens I et II ait été réalisée au sein de la PCL ou respectivement du mélange PCL-TPD.

Selon l'invention, on préconise trois formulations thermoplastiques pour la composition du ruban thermorétractable, à savoir:

*la formulation $F_1$* qui renferme
– A) 100 parties en poids de PCL, et
– $B_1$) 5 à 50 parties en poids (de préférence 10 à 30 parties en poids) de TPD avec
– le cas échéant, un ou plusieurs des adjuvants précités, en particulier les moyens C et D;

*la formulation $F_2$* qui renferme
– A) 100 parties en poids de PCL, et
– $B_2$) 5 à 50 parties en poids (de préférence 10 à 20 parties en poids) de PU, avec
– le cas échéant, un ou plusieurs des adjuvants précités;

*la formulation $F_3$* qui renferme
– A) 100 parties en poids de PCL, et
– $B_3$) 5 à 50 parties en poids d'un mélange TPD-PU (notamment 5 à 30 parties en poids de TPD et 5 à 20 parties en poids de PU), avec,
– le cas échéant, un ou plusieurs des adjuvants précités.

Le procédé de préparation d'un ruban thermorétractable selon l'invention, qui comprend le mélange de la polycaprolactone avec au moins une substance polymère choisie parmi l'ensemble constitué par les transpolydiènes, le polyuréthanne et leurs mélanges (le polyuréthanne étant formé *in situ* à partir d'au moins un polyisocyanate et d'au moins un polyol, en quantités sensiblement stœchiométriques), puis le moulage sous pression de la composition résultante, est caractérisé en ce que la masse moulée est étirée de 10 à 20 fois sa longueur à une température comprise entre 10 et 40° C, puis découpée sous forme de bandes.

De façon avantageuse, les bandes ainsi obtenues auront une épaisseur de l'ordre de 0,1 à 0,5 mm.

Les modalités opératoires communes pour la préparation des formulations F comprennent:

1° le mélange des moyens A et B à une température comprise entre 40 et 130° C, pendant 1 à 10 min, sous agitation, à une vitesse angulaire comprise entre 50 et 300 tr/min, le rapport pondéral A-B étant compris entre 20 et 2,

2° le moulage sous pression de la composition résultante à une température supérieure ou égale à 60° C (et de préférence comprise entre 60 et 100° C) pendant 10 à 30 min, pour obtenir une feuille ayant une épaisseur comprise entre 1 et 7 mm (et de préférence entre 1 et 4,5 mm), puis

3° l'étirage de la feuille ainsi obtenue de 10 à 20 fois sa longueur, à une température comprise entre 10 et 40° C (de préférence entre 20 et 30° C), et le découpage.

Pour la préparation d'une formulation $F_1$, le stade 1° est mis en œuvre à une température comprise entre 40 et 120° C (de préférence, on opérera à 60-100° C après avoir introduit le TPD dans la PCL), les stades 2° et 3° étant ensuite réalisés comme indiqué ci-dessus.

Pour la préparation d'une formulation comprenant du PU ($F_2$ ou $F_3$), on prévoit au stade 1° l'introduction des moyens I et II dans la PCL ou le mélange PCL-TPD pour la formation ou l'initiation de la formation du PU *in situ*, la réaction étant effectuée à 75-130° C pendant 1 à 10 min, les quantités respectives des moyens I et II étant telles que le nombre de groupes NCO libres provenant du moyen I soit sensiblement égal au nombre de groupes OH libres provenant du moyen II. La poursuite de la formation du PU *in situ* est réalisée au stade 2° (le cas échéant on peut prévoir, comme dans la demande précitée, la mise en œuvre de ladite poursuite de la formation du PU *in situ*, notamment à une température supérieure ou égale à 60° C et, de préférence, comprise entre 60 et 100° C, avant d'effectuer le stade 2°). Le stade 3° est ensuite mis en œuvre comme indiqué ci-dessus.

La formulation $F_2$, préparée avec ou sans traitement complémentaire entre les stades 1° et 2°, est préférée, selon l'invention, aux formulations $F_1$ et $F_3$.

Les moyens I qui conviennent sont des polyisocyanates renfermant au moins 2 groupes NCO libres par molécule. Parmi ceux-ci, on peut notamment mentionner i) les di-, tri- et tétra-isocyanates de formule $R(NCO)_n$ (où n est un nombre entier ayant une valeur comprise entre 2 et 4, et R est notamment un groupe aliphatique, cycloaliphatique, aryle ou aralkyle comprenant de 4 à 15 atomes de carbone), tels que les 2,4-toluènediisocyanate, 2,6-toluènediisocyanate, 4,4'-diphénylméthanediisocyanate, 1,6-hexaméthylènediisocyanate, 1,4-cyclohexanediisocyanate, 4,4'-dicyclohexylméthanediisocyanate et isophoronediisocyanate (i.e. le diisocyanate dérivé de 2,6-diméthyl-2,5-heptadiène-4-one), ii) les prépolymères du type polyuréthanne renfermant des groupes NCO libres et obtenus par réaction d'un polyisocyanate en excès avec un polyol, un polyoléther et/ou un polyolester, et iii) leurs mélanges.

Parmi les moyens I mentionnés ci-dessus, les polyisocyanates les plus intéressants sont les 2,4-toluènediisocyanate, 2,6-toluènediisocyanate et 4,4'-diphénylméthanediisocyanate, les moyens préférés étant le 2,4-toluènediisocyanate et le toluènediisocyanate commercial qui renferme 80% en poids d'isomère-2,4 et 20% en poids d'isomère-2,6.

Les moyens II qui conviennent sont des polyols renfermant au moins 2 groupes OH libres par molécule. Parmi ceux-ci, on peut notamment citer les polyétherpolyols ayant un poids moléculaire équivalent compris entre environ 80 et environ 400, et renfermant au moins 2 groupes OH libres par molécule. Ces polyétherpolyols sont en général obtenus par condensation d'un oxyde d'alkylène (en abrégé OA) tel que l'oxyde d'éthylène et l'oxyde de propylène avec un diol tel que l'éthylèneglycol, le propylèneglycol, le diéthylèneglycol, l'hexaméthylèneglycol, le tétraméthylèneglycol et le cyclohexyl-1,4-diméthanol, un triol, un tétraol tel que le pentaérythritol, un pentol, un hexol tel que le dulcitol et le sorbitol, et leurs mélanges. Cette condensation est réalisée en général à raison de 1 à 20 groupes OA par groupe OH libre de polyol.

Parmi les polyols II qui conviennent, on peut notamment mentionner les polyesterpolyols tels que les produits commercialisés sous la nomenclature Isonol RMJ 101 et RMJ 104 par la société Upjohn, et sous la nomenclature Scuranol P 440, P 460, P 4004 et P 4001 par la société Rhône-Poulenc.

De façon avantageuse, on pourra faire appel à des polyétherpolyols disponibles dans le commerce, et en particulier aux produits fabriqués et commercialisés par le société Péchiney-Ugine-Kuhlmann sous les nomenclatures:

– Ugipol 1004, 1010, 1020, 1061, 1092 et 1093 qui sont des produits de condensation d'oxyde d'alkylène avec un ou plusieurs diols,
– Ugipol 1130, 1131, 1171, 1180, 1340, 1370, 1371 et 1372 qui sont des produits de condensation d'oxyde d'alkylène avec un ou plusieurs triols,
– Ugipol 3310, 3320, 3400, 3420, 3450, 3460 et 3602 qui sont des produits de condensation d'oxyde d'alkylène avec un ou plusieurs tétraols, pentols et/ou hexols.

D'autres avantages et caractéristiques de l'invention seront mieux compris à la lecture qui va suivre d'exemples de préparation nullement limitatifs mais donnés à titre d'illustration.

*Exemple 1:*

a) Dans un malaxeur étanche à pales, dans lequel on maintient une température de 80° C et une agitation de 150 tr/min, on introduit successivement:

– 800 g de polycaprolactone (produit commercialisé par la société Union Carbide sous la nomenclature de PCL 700 et ayant un poids moléculaire moyen de 40 000 environ);
– lorsque la polycaprolactone est ramollie (c'est-à-dire environ 2 à 5 min après l'introduction de la PCL), 70 g de polyétherpolyol (produit commercialisé par la société Péchiney-Ugine-Kuhlmann sous la nomenclature de Ugipol 3602 et ayant un poids moléculaire équivalent de 140 environ), puis
– lorsque le mélange résultant est ramolli et homogène (c'est-à-dire environ 2 à 5 min après l'introduction du polyétherpolyol), la quantité stœchiométrique (43 g) de 2,4-toluènediisocyanate.

On maintient le mélange résultant à 80° C sous agitation (150 tr/min) pendant 10 min.

b) On stoppe l'agitation et on laisse reposer le mélange ainsi obtenu dans le malaxeur à 80° C pendant 10 min.

c) On verse dans un moule rectangulaire le mélange ainsi obtenu et presse à 80° C pendant 10 min. On obtient une feuille ayant une épaisseur comprise entre 2 et 4 mm qu'on laisse refroidir jusqu'à 20-30° C.

d) On étire la feuille ainsi obtenue de 10 à 20 fois sa longueur, à une température de 20-30° C, pour obtenir une feuille ayant une épaisseur de 0,1 à 0,5 mm, que l'on découpe en bandes de largeur désirée.

*Exemple 2:*

a) On procède comme indiqué à l'exemple 1a avec un malaxeur étanche à vis en remplaçant le 2,4-toluènediisocyanate par le toluènediisocyanate commercial qui comprend 80% en poids d'isomère-2,4 et 20% en poids d'isomère-2,6.

b) On injecte en continu le mélange ainsi obtenu dans des moules (de 0,5 × 0,5 m) et presse à 80° C pendant 20 min.

c) On refroidit les moules jusqu'à la température ambiante, et obtient de chaque moule une feuille ayant une épaisseur de 3 à 3,5 mm.

d) On procède ensuite comme indiqué à l'exemple 1d pour obtenir des bandes découpées ayant une épaisseur de 0,1 à 0,5 mm.

*Exemple 3:*

a) On procède comme indiqué à l'exemple 1a à partir de 700 g de PCL (PCL 700), de 25 g de polyétherpolyol (Ugipol 3602) et de 15 g de toluènediisocyanate commercial.

b) On verse le mélange ainsi obtenu dans des moules carrés (0,5 × 0,5 m) et presse à 75° C pendant 20 min.

c) On refroidit le moule jusqu'à la température ambiante (15-20° C) pour obtenir de chaque moule une feuille ayant une épaisseur de 3 à 3,5 mm.

d) On étire une feuille ainsi obtenue selon une direction parallèle à l'un de ses côtés de 10 à 20 fois la longueur dudit côté, à une température de 15-20° C, pour obtenir une feuille de 0,1 à 0,5 mm d'épaisseur que l'on découpe en bandes.

*Exemple 4:*

a) Dans un malaxeur étanche à pales, dans lequel on maintient une température de 75° C et une agitation de 200 tr/min, on introduit successivement:

– 1000 g de polycaprolactone (ayant un poids moléculaire moyen de 35 000 environ);
– lorsque la PCL est ramollie, 100 g de polyétherpolyol (50 g d'Ugipol 3602 et 50 g d'Ugipol 1004), puis
– lorsque le mélange résultant est ramolli et homogène, 50 g de toluènediisocyanate commercial.

On maintient la température à 75° C et l'agitation à 200 tr/min pendant 8 min.

b) On stoppe l'agitation et on laisse la réaction de polymérisation du PU se développer pendant 10 min à 80° C.

c) On verse le mélange résultant dans un moule et presse à 60° C pendant 10 min. On obtient une feuille de 4 mm d'épaisseur que l'on étire de 10 à 20 fois à sa longueur à une température de 20-30° C, puis découpe en bandes.

*Exemples 5 à 8:*

On procède comme indiqué à l'exemple 2, à partir de PCL, de toluènediisocyanate commercial et d'un polyétherpolyol obtenu par condensation d'oxyde d'éthylène sur l'hexaméthylèneglycol, en proportions telles que l'on obtienne, après étirage et découpage, des bandes de 0,1 à 0,5 mm d'épaisseur, comprenant:
*Exemple 5:* 100 parties en poids de PCL et 5 parties en poids de PU;
*Exemple 6:* 100 parties en poids de PCL et 10 parties en poids de PU;

*Exemple 7:* 100 parties en poids de PCL et 20 parties en poids de PU, et
*Exemple 8:* 100 parties en poids de PCL et 50 parties en poids de PU.

*Exemples 9 à 12:*

On procède comme indiqué à l'exemple 2 à partir de PCL, de toluènediisocyanate commercial et d'un polyétherpolyol obtenu par condensation d'oxyde de propylène sur un triol, en proportions telles que l'on obtienne, après étirage et découpage, des bandes de 0,1 à 0,5 mm d'épaisseur, comprenant:
*Exemple 9:* 100 parties en poids de PCL et 5 parties en poids de PU;
*Exemple 10:* 100 parties en poids de PCL et 10 parties en poids de PU;
*Exemple 11:* 100 parties en poids de PCL et 20 parties en poids de PU, et
*Exemple 12:* 100 parties en poids de PCL et 50 parties en poids de PU.

*Exemples 13 à 16:*

On procède comme indiqué à l'exemple 2 à partir de PCL, de toluènediisocyanate commercial et d'un polyétherpolyol (Ugipol 3602), en proportions telles que l'on obtienne, après étirage, des bandes de 0,1 à 0,5 mm d'épaisseur, comprenant:
*Exemple 13:* 100 parties en poids de PCL et 5 parties en poids de PU;
*Exemple 14:* 100 parties en poids de PCL et 10 parties en poids de PU;
*Exemple 15:* 100 parties en poids de PCL et 20 parties en poids de PU, et
*Exemple 16:* 100 parties en poids de PCL et 50 parties en poids de PU.

*Exemples 17 à 20:*

On procède comme indiqué à l'exemple 2 à partir de PCL, de toluènediisocyanate commercial et d'un polyesterpolyol (Scuranol P 4004, fabriqué par la société Rhône-Poulenc), en proportions telles que l'on obtienne après étirage et découpage des bandes de 0,1 à 0,5 mm d'épaisseur comprenant:
*Exemple 17:* 100 parties en poids de PCL et 5 parties en poids de PU;
*Exemple 18:* 100 parties en poids de PCL et 10 parties en poids de PU;
*Exemple 19:* 100 parties en poids de PCL et 20 parties en poids de PU, et
*Exemple 20:* 100 parties en poids de PCL et 50 parties en poids de PU.

*Exemple 21:*

Dans un malaxeur à pales dans lequel on maintient sous atmosphère d'azote une agitation de 180 tr/min, on prépare un prépolymérisat de moyens I et II par réaction à 110-130° C, pendant 2 à 5 min, de 100 parties en poids de Teracol 1000 [mélange de polytétraméthylène/éther/glycols de formule:

$$HO-(CH_2-CH_2-CH_2-CH_2-O)_n-H$$

où n est un nombre compris entre 6 et 42 et a pour valeur moyenne 13,63, fabriqué par la société Du Pont de Nemours] préalablement chauffé à 100-105° C pendant au moins 1 h sous vide pour éliminer les traces d'eau, avec 53 parties en poids de 4,4'-diphénylméthanediisocyanate préalablement chauffé à 70° C.

Dans le mélange réactionnel ainsi obtenu, on introduit à 75° C sous agitation et sous atmosphère d'azote 13,4 parties en poids d'acide stéarique, puis 502,5 parties en poids de PCL ayant un poids moléculaire de 40000 environ, et enfin 14,4 parties en poids de 1,4-cyclohexyldiméthanol. On laisse sous agitation le mélange ainsi obtenu pendant 5 min à 75° C pour poursuivre la réaction de polymérisation du PU.

On coule ensuite le mélange résultant dans des moules rectangulaires et presse à 100° C pendant 20 min pour obtenir, après refroidissement à 20° C, des feuilles ayant une épaisseur de 3 à 3,5 mm, que l'on étire de 10 à 20 fois leur longueur à 20° C, puis découpe en bandes.

Dans ces conditions opératoires où les 1,4-cyclohexyldiméthanol, Teracol 1000 et 4,4'-diphénylméthanediisocyanate sont dans un rapport molaire d'environ (1:1:2), on obtient un produit final en feuille renfermant approximativement 2,66 parties en poids d'acide stéarique et 33,31 parties en poids de PU imbriqué dans le réseau de 100 parties en poids de PCL.

*Exemples 22 à 25:*

Dans un malaxeur étanche à pales chauffé à 60° C, on introduit d'abord la PCL, on ajoute ensuite une faible quantité d'agent plastifiant (acide stéarique). Lorsque le mélange est fondu et homogène, on ajoute la quantité requise de TPD (trans-polychloroprène commercialisé sous la dénomination de Néoprène AD 30 par la société Du Pont de Nemours) et, le cas échéant, du $TiO_2$ (ayant une granulométrie inférieure ou égale à 100 µ). Le mélange résultant est maintenu sous agitation à 150 tr/min, à une température de 60° C pendant 5 min.

Le mélange chaud est retiré du malaxeur et est coulé dans des moules carrés (de 0,5 m de côté) et pressé à 100° C pendant 20 min.

Chaque moule est refroidi jusqu'à 20-25° C au moyen d'un circuit d'eau froide. Les feuilles moulées ainsi obtenues sont étirées selon une direction parallèle à l'un de leurs côtés de 10 à 20 fois la longueur dudit côté, à 20-25° C, pour donner, après découpage, des bandes ayant une épaisseur

de 0,1 à 0,5 mm ayant les compositions suivantes:
*Exemple 22:* 100 parties en poids de PCL, 10 parties en poids de trans-polychloroprène, 20 parties en poids de $TiO_2$ et 2 parties en poids d'acide stéarique;
*Exemple 23:* 100 parties en poids de PCL, 20 parties en poids de trans-polychloroprène et 2 parties en poids d'acide stéarique;
*Exemple 24:* 100 parties en poids de PCL, 30 parties en poids de trans-polychloroprène, 10 parties en poids de $TiO_2$ et 2 parties en poids d'acide stéarique;
*Exemple 25:* 100 parties en poids de PCL, 40 parties en poids de trans-polychloroprène, 20 parties en poids de $TiO_2$ et 2 parties en poids d'acide stéarique.

Les bandes obtenues selon les exemples décrits ci-dessus sont utilisables sous forme de rubans rétractables, soit comme isolants de conducteurs électriques, soit comme liens. La rétractation correspond approximativement à l'étirage. Ces rubans sont aisément manipulables et modelables même à mains nues à 30-40° C pendant 1 à 3 min. On constate que, par ailleurs, à l'état étiré, ces rubans sont enroulables sur eux-mêmes à froid, ce qui facilite la réalisation de manchons ou liens protecteurs. Des exemples d'application ont été donnés ci-après.

*Manchon rétractable*

On enroule un ruban selon l'invention autour d'objets à assembler côte à côte ou bout à bout, par exemple des fils électriques; avec un pistolet à air chaud (du type sèche-cheveux ou «hair dryer»), on chauffe le ruban à une température comprise entre 40 et 65° C pendant une courte durée de temps (en général inférieure à 1 min), le ruban se rétracte fortement et enveloppe étroitement les fils électriques. Il se forme ainsi un manchon de protection étanche, très résistant aux chocs et aux déformations et isolant.

*Gaine protectrice*

On enroule un ruban selon l'invention avec recouvrement spiralé sur lui-même autour d'un fil électrique, de façon que toute la surface du conducteur soit enrobée sur une longueur déterminée à l'avance. On traite avec un pistolet à air chaud pendant une courte durée de temps. Après rétractation, on obtient une gaine protectrice enrobant le fil électrique sur ladite longueur, étanche, isolante et résistante aux chocs et aux déformations.

*Autres assemblages*

On peut également utiliser les rubans selon l'invention comme liens de deux ou plusieurs articles quelconques (bouteilles, tuyaux d'eau froide, morceaux de bois, etc.) soit pour les raccorder, soit pour les maintenir en gerbes ou en bottes.

Pour le cerclage des palettes, on a constaté que les rubans selon l'invention présentent l'avantage de se coller à chaud sur eux-mêmes sans qu'il soit nécessaire de prévoir un dispositif d'accrochage.

**Revendications**

1. Ruban thermorétractable utile dans le conditionnement de divers articles notamment comme moyen isolant ou moyen de liaison, et réalisé à partir d'une association de polycaprolactone avec au moins une autre substance polymère, caractérisé en ce qu'il comprend dans sa composition:
A) 100 parties en poids de polycaprolactone, et
B) 5 à 50 parties en poids d'une substance choisie parmi l'ensemble constitué par les transpolydiènes, le polyuréthanne et leurs mélanges;
et en ce qu'il est thermorétractable et autocollant à une température comprise entre 30 et 80° C et avantageusement à une température comprise entre 40 et 65° C.

2. Ruban thermorétractable selon la revendication 1, caractérisé en ce qu'il comprend dans sa composition au moins une substance choisie parmi les charges minérales, les plastifiants, les colorants et leurs mélanges.

3. Ruban thermorétractable selon la revendication 2, caractérisé en ce qu'il comprend dans sa composition:
C) au plus 35 parties en poids de charge minérale, et notamment 5 à 35 parties en poids.

4. Ruban thermorétractable selon la revendication 2, caractérisé en ce qu'il comprend dans sa composition:
D) au plus 5 parties en poids d'agent plastifiant et notamment 1 à 2 parties en poids, l'agent plastifiant préféré étant l'acide stéarique.

5. Ruban thermorétractable, utile dans le conditionnement et réalisé à partir d'une association de polycaprolactone avec au moins une autre substance polymère, caractérisé en ce qu'il comprend dans sa composition:
A) 100 parties en poids de polycaprolactone,
B) 5 à 50 parties en poids d'une substance choisie parmi l'ensemble constitué par les transpolydiènes, le polyuréthanne et leurs mélanges,
C) le cas échéant, 5 à 35 parties en poids de charge minérale, et
D) le cas échéant, 1 à 5 parties en poids d'agent plastifiant;
en ce qu'il a une épaisseur comprise entre 0,1 et 0,5 mm et a été obtenu par étirage de 10 à 20 fois sa longueur à 10-40° C d'une feuille de 1 à 7 mm d'épaisseur comprenant les moyens A et B en association, le cas échéant, avec les moyens C et D, et en ce qu'il est thermorétractable et autocollant à une température comprise entre 30 et 80° C et avantageusement à une température comprise entre 40 et 65° C.

6. Ruban thermorétractable selon l'une des revendications 1 ou 5, caractérisé en ce que la formation du polyuréthanne qu'il comprend a été initiée *in situ* par réaction, à 75-130° C pendant 1 à 10 min, d'un moyen I choisi parmi l'ensemble constitué par les polyisocyanates et leurs mélanges avec un moyen II choisi parmi l'ensemble des polyols et leurs mélanges, les quantités respectives des moyens I et II étant telles que, avant réaction, le nombre de groupes NCO libres provenant du

moyen I soit sensiblement égal au nombre de groupes OH libres provenant du moyen II.

7. Ruban thermorétractable selon l'une des revendications 1 ou 5, caractérisé en ce qu'il comprend dans sa composition:

A) 100 parties en poids de polycaprolactone, et

$B_1$) 5 à 50 parties en poids d'un trans-polydiène choisi parmi l'ensemble constitué par les trans-polybutadiène, trans-polyisoprène, trans-polychloroprène et leurs mélanges.

8. Ruban thermorétractable selon l'une des revendications 1 ou 5, caractérisé en ce qu'il comprend dans sa composition:

A) 100 parties en poids de polycaprolactone, et

$B_2$) 5 à 50 parties en poids de polyuréthanne formé *in situ* par réaction dans la polycaprolactone, à 75-130° C, pendant 1 à 10 min, d'au moins un polyisocyanate avec au moins un polyol dans des conditions sensiblement stœchiométriques.

9. Ruban thermorétractable selon l'une des revendications 1 ou 5, caractérisé en ce qu'il comprend dans sa composition:

A) 100 parties en poids de polycaprolactone, et

$B_3$) 5 à 50 parties en poids d'un mélange de trans-polydiène et de polyuréthanne formé par réaction *in situ* à 75-130° C pendant 1 à 10 min d'au moins un polyisocyanate avec au moins un polyol dans des conditions sensiblement stœchiométriques.

10. Ruban thermorétractable selon la revendication 7, caractérisé en ce qu'il comprend 10 à 30 parties en poids de trans-polydiène pour 100 parties en poids de polycaprolactone.

11. Ruban thermorétractable selon la revendication 8, caractérisé en ce qu'il comprend 10 à 20 parties en poids de polyuréthanne pour 100 parties en poids de polycaprolactone.

12. Ruban thermorétractable selon la revendication 9, caractérisé en ce qu'il comprend 5 à 30 parties en poids de trans-polydiène et 5 à 20 parties en poids de polyuréthanne pour 100 parties en poids de polycaprolactone.

13. Procédé de préparation d'un ruban thermorétractable selon l'une des revendications 1 à 12, ledit procédé, qui comprend le mélange de la polycaprolactone avec une substance polymère choisie parmi l'ensemble constitué par le trans-polydiène, le polyuréthanne et leur mélange, le moulage sous pression de la composition résultante, l'étirage du produit moulé résultant, puis le découpage du produit étiré ainsi obtenu, étant caractérisé en ce qu'il comprend:

1° le mélange des moyens A et B à une température comprise entre 40 et 130° C, pendant 1 à 10 min, sous agitation à une vitesse angulaire comprise entre 50 et 300 tr/min, le rapport pondéral A-B étant compris entre 20 et 2,

2° le moulage sous pression de la composition résultante à une température supérieure ou égale à 60° C (et de préférence comprise entre 60 et 100° C) pendant 10 à 30 min, pour obtenir une feuille ayant une épaisseur comprise entre 1 et 7 mm (et de préférence entre 1 et 4,5 mm), puis

3° l'étirage de la feuille ainsi obtenue de 10 à 20 fois sa longueur, à une température comprise entre 10 et 40° C (de préférence entre 20 et 30° C), et le découpage.

14. Procédé selon la revendication 13, pour la préparation d'un ruban thermoplastique selon l'une des revendications 7 ou 10, caractérisé en ce que le mélange du stade 1° est mis en œuvre à une température comprise entre 40 et 120° C et de préférence à une température comprise entre 60 et 100° C.

15. Procédé selon la revendication 13, pour la préparation d'un ruban selon l'une des revendications 8, 9, 11 ou 12, caractérisé en ce que l'on initie au stade 1° la formation du polyuréthanne en faisant réagir *in situ*, à 75-130° C, pendant 1 à 10 min, dans des conditions sensiblement stœchiométriques, un moyen I choisi parmi les polyisocyanates et leurs mélanges, avec un moyen II choisi parmi les polyols et leurs mélanges.

16. Procédé selon la revendication 15, caractérisé en ce que le moyen II est choisi parmi l'ensemble des polyétherpolyols obtenus par condensation d'un oxyde d'alkylène OA, tel que notamment l'oxyde d'éthylène et l'oxyde de propylène, avec un diol tel que l'éthylèneglycol, le propylèneglycol, le diéthylèneglycol, l'hexaméthylèneglycol, le tétraméthylèneglycol et le cyclohexyl-1,4-diméthanol, un triol, un tétraol tel que le pentaérythritol, un pentol ou un hexol tel que le dulcitol et le sorbitol, cette condensation étant réalisée à raison d'environ 1 à environ 20 groupes OA par groupe OH libre.

17. Procédé selon la revendication 15, caractérisé en ce que le moyen II est un polyétherpolyol répondant à la formule générale:

$$HO-(CH_2-CH_2-CH_2-CH_2-O)_nH$$

où n est un nombre entier compris entre 6 et 42.

18. Procédé selon la revendication 15, caractérisé en ce que le moyen I est choisi parmi l'ensemble constitué par le 2,4-toluènediisocyanate, le 2,6-toluènediisocyanate, le 4,4'-diphénylméthanediisocyanate, le 1,6-hexaméthylènediisocyanate, le 1,4-cyclohexanediisocyanate, le 4,4'-dicyclohexylméthanediisocyanate, l'isophoronediisocyanate et leurs mélanges.

## Patentansprüche

1. Thermoretrahierbares Band, das beim Konditionieren verschiedener Artikel, insbesondere als Isoliermittel oder Bindemittel, nützlich und aus einer Vereinigung von Polycaprolacton mit mindestens einer weiteren Polymersubstanz hergestellt ist, dadurch gekennzeichnet, dass des in seiner Zusammensetzung folgendes umfasst:

A) 100 Gew.-Teile Polycaprolacton, und

B) 5 bis 50 Gew.-Teile einer Substanz, ausgewählt aus der Gruppe bestehend aus trans-Polydienen, Polyurethan und Mischungen davon,

und dass es bei einer Temperatur zwischen 30 und 80° C, vorzugsweise zwischen 40 und 65° C, thermoretrahierbar und selbstklebend ist.

2. Thermoretrahierbares Band nach Anspruch 1, dadurch gekennzeichnet, dass es in seiner Zusammensetzung mindestens eine Substanz, ausgewählt aus mineralischen Füllstoffe, Plastifizierungsmitteln, Farbstoffen und Mischungen davon, enthält.

3. Thermoretrahierbares Band nach Anspruch 2, dadurch gekennzeichnet, dass es in seiner Zusammensetzung

C) höchstens 35 Gew.-Teile, insbesondere 5 bis 35 Gew.-Teile, an mineralischem Füllstoff enthält.

4. Thermoretrahierbares Band nach Anspruch 2, dadurch gekennzeichnet, dass es in seiner Zusammensetzung

D) höchstens 5 Gew.-Teile, insbesondere 1 bis 2 Gew.-Teile, an Plastifizierungsmittel enthält, wobei das bevorzugte Plastifizierungsmittel Stearinsäure ist.

5. Thermoretrahierbares Band, das beim Konditionieren nützlich und aus einer Vereinigung von Polycaprolacton mit mindestens einer weiteren Polymersubstanz hergestellt ist, dadurch gekennzeichnet, dass es in seiner Zusammensetzung folgendes umfasst:

A) 100 Gew.-Teile Polycaprolacton,

B) 5 bis 50 Gew.-Teile einer Substanz, ausgewählt aus der Gruppe bestehend aus trans-Polydienen, Polyurethan und Mischungen davon,

C) ggf. 5 bis 35 Gew.-Teile an mineralischem Füllstoff, und

D) ggf. 1 bis 5 Gew.-Teile an Plastifizierungsmittel;

und dass es eine Stärke zwischen 0,1 und 0,5 mm aufweist und durch Verstrecken einer Folie von 1 bis 7 mm Stärke, welche die Mittel A und B, ggf. zusammen mit den Mitteln C und D, enthält, um das 10- bis 20fache ihrer Länge bei 10 bis 40° C erhalten wird; und dass sie bei einer Temperatur zwischen 30 und 80° C, vorteilhafterweise bei einer Temperatur zwischen 40 und 65° C, thermoretrahierbar und selbstklebend ist.

6. Thermoretrahierbares Band nach einem der Ansprüche 1 oder 5, dadurch gekennzeichnet, dass die Bildung des darin enthaltenen Polyurethans durch Umsetzung eines Mittels I, ausgewählt aus der Gruppe bestehend aus Polyisocyanaten und Mischungen davon, mit einem Mittel II, ausgewählt aus der Gruppe bestehend aus Polyolen und Mischungen davon, bei 75 bis 130° C während 1 bis 10 min *in situ* eingeleitet wird, wobei die jeweiligen Mengen der Mittel I und II derart sind, dass die Anzahl an freien NCO-Gruppen des Mittels I im wesentlichen gleich der Anzahl an freien OH-Gruppen des Mittels II sind.

7. Thermoretrahierbares Band nach einem der Ansprüche 1 oder 5, dadurch gekennzeichnet, dass es in seiner Zusammensetzung

A) 100 Gew.-Teile Polycaprolacton, und

$B_1$) 5 bis 50 Gew.-Teile eines trans-Polydiens, ausgewählt aus der Gruppe bestehend aus trans-Polybutadien, trans-Polyisopren, trans-Polychloropren und Mischungen davon

enthält.

8. Thermoretrahierbares Band nach einem der Ansprüche 1 oder 5, dadurch gekennzeichnet, dass es in seiner Zusammensetzung

A) 100 Gew.-Teile Polycaprolacton, und

$B_2$) 5 bis 50 Gew.-Teile Polyurethan, das durch Umsetzung mindestens eines Polyisocyanats mit mindestens einem Polyol unter in wesentlichen stöchiometrischen Bedingungen in Polycaprolacton bei 75 bis 130° C während 1 bis 10 min *in situ* gebildet wird,

enthält.

9. Thermoretrahierbares band nach einem der Ansprüche 1 oder 5, dadurch gekennzeichnet, dass es in seiner Zusammensetzung

A) 100 Gew.-Teile Polycaprolacton, und

$B_3$) 5 bis 50 Gew.-Teile einer Mischung aus trans-Polydien und Polyurethan, die durch *in situ*-Reaktion mindestens eines Polyisocyanats mit mindestens einem Polyol unter im wesentlichen stöchiometrischen Bedingungen bei 75 bis 130° C während 1 bis 10 min gebildet wird,

enthält.

10. Thermoretrahierbares Band nach Anspruch 7, dadurch gekennzeichnet, dass es 10 bis 30 Gew.-Teile trans-Polydien pro 100 Gew.-Teile Polycaprolacton

enthält.

11. Thermoretrahierbares Band nach Anspruch 8, dadurch gekennzeichnet, dass es 10 bis 20 Gew.-Teile Polyurethan pro 100 Gew.-Teile Polycaprolacton

enthält.

12. Thermoretrahierbares Band nach Anspruch 9, dadurch gekennzeichnet, dass es 5 bis 30 Gew.-Teile trans-Polydien und 5 bis 20 Gew.-Teile Polyurethan pro 100 Gew.-Teile Polycaprolacton

enthält.

13. Verfahren zur Herstellung eines thermoretrahierbaren Bandes nach einem der Ansprüche 1 bis 12, bei welchem Polycaprolacton mit einer Polymersubstanz, ausgewählt aus der Gruppe bestehend aus trans-Polydien, Polyurethan und deren Mischung, vermischt, die resultierende Zusammensetzung druckgegossen, das resultierende Gussprodukt verstreckt und das so erhaltene verstreckte Produkt zurechtgeschnitten wird, dadurch gekennzeichnet, dass es folgendes umfasst:

1° Mischen der Mittel A und B bei einer Temperatur zwischen 40 und 130° C während 1 bis 10 min unter Rühren bei einer Winkelgeschwindigkeit zwischen 50 und 300 U/min, wobei das Gewichtsverhältnis A-B zwischen 20 und 2 beträgt,

2° Druckgiessen der resultierenden Zusammensetzung bei einer Temperatur von mindestens 60° C (vorzugsweise zwischen 60 und 100° C) während 10 bis 30 min zur Erzielung einer Folie mit einer Stärke zwischen 1 und 7 mm (vorzugsweise zwischen 1 und 4,5 mm) und

3° Verstrecken der so erhaltenen Folie bei einer Temperatur zwischen 10 und 40° C (vorzugsweise zwischen 20 und 30° C) um das 10- bis 20fache ihrer Länge und Zurechtschneiden.

14. Verfahren nach Anspruch 13 zur Herstellung eines thermoplastischen Bandes nach einem der Ansprüche 7 oder 10, dadurch gekennzeichnet, dass das Mischen in Stufe 1° bei einer Temperatur zwischen 40 und 140° C, vorzugsweise bei

einer Temperatur zwischen 60 und 100° C, durchgeführt wird.

15. Verfahren nach Anspruch 13 zur Herstellung eines Bandes nach einem der Ansprüche 8, 9, 11 oder 12, dadurch gekennzeichnet, dass man in Stufe 1° die Bildung des Polyurethans einleitet, indem man unter im wesentlichen stöchiometrischen Bedingungen ein Mittel I, ausgewählt aus Polyisocyanaten und Mischungen davon, mit einem Mittel II, ausgewählt aus Polyolen und Mischungen davon, bei 75 bis 130° C während 1 bis 10 min *in situ* reagieren lässt.

16. Verfahren nach Anspruch 15, dadurch gekennzeichnet, dass das Mittel II ausgewählt ist aus der Gruppe der Polyätherpolyole, die durch Kondensation eines Alkylenoxids OA, wie insbesondere Äthylenoxid und Propylenoxid, mit einem Diol, wie Äthylenglykol, Propylenglykol, Diäthylenglykol, Hexametylenglykol, Tetramethylenglykol und Cyclohexyl-1,4-dimethanol, einem Triol, einem Tetraol, wie Pentaerythrit, einem Pentit oder einem Hexit, wie Dulcit und Sorbit, welche Kondensation in einem Verhältnis von etwa 1 bis etwa 20 OA-Gruppen pro freier OH-Gruppe durchgeführt wird, erhalten werden.

17. Verfahren nach Anspruch 15, dadurch gekennzeichnet, dass das Mittel II ein Polyätherpolyol der allgemeinen Formel

$$HO-(CH_2-CH_2-CH_2-CH_2-O)_nH$$

ist, worin n eine ganze Zahl zwischen 6 und 42 bedeutet.

18. Verfahren nach Anspruch 15, dadurch gekennzeichnet, dass das Mittel I ausgewählt ist aus der Gruppe bestehend aus 2,4-Toluoldiisocyanat, 2,6-Toluoldiisocyanat, 4,4'-Diphenylmethandiisocyanat, 1,6-Hexamethylendiisocyanat, 1,4-Cyclohexandiisocyanat, 4,4'-Dicyclohexylmethandiisocyanat, Isophorondiisocyanat und Mischungen davon.

## Claims

1. Thermoretractable tape useful in the packaging of various articles particularly as insulating means or binding means, and produced from an association of polycaprolactone with at least one other polymeric substance, characterised in that it comprises in its composition

(*A*) 100 parts by weight of polycaprolactone, and

(*B*) 5 to 50 parts by weight of a substance selected from among the group constituted by trans-polydienes, polyurethane and their mixtures;

and in that it is thermoretractable and self-adhesive at a temperature comprised between 30 and 80° C and advantageously at a temperature comprised between 40 and 65° C.

2. Thermoretractable tape according to Claim 1, characterised in that it comprises in its composition at least one substance selected from among inorganic fillers, plasticisers, colouring agents and their mixtures.

3. Thermoretractable tape according to Claim 2, characterised in that it comprises in its composition

(*C*) at the most 35 parts by weight of inorganic filler, and particularly 5 to 35 parts by weight.

4. Thermoretractable tape according to Claim 2, characterised in that it comprises in its composition

(*D*) at the most 5 parts by weight of plasticising agent and particularly 1 to 2 parts by weight, the preferred plasticising agent being stearic acid.

5. Thermoretractable tape, useful in packaging and produced from an association of polycaprolactone with at least one other polymeric substance, characterised in that it comprises in its composition

(*A*) 100 parts by weight of polycaprolactone,

(*B*) 5 to 50 parts by weight of a substance selected from among the groups constituted by trans-polydienes, polyurethane and their mixtures,

(*C*) if necessary, 5 to 35 parts by weight of an inorganic filler, and

(*D*) if necessary, 1 to 5 parts by weight of plasticising agent;

and in that it has a thickness comprised between 0.1 and 0.5 mm and has been obtained by stretching from 10 to 20 times its length at 10-40° C a sheet of 1 to 7 mm thickness comprising means (*A*) and (*B*) in association, if necessary, with means (*C*) and (*D*); and in that it is thermoretractable and self-adhesive at a temperature comprised between 30 and 80° C and advantageously at a temperature comprised between 40 and 65° C.

6. Thermoretractable tape according to any one of Claims 1 or 5, characterised in that the formation of the polyurethane that it comprises has been initiated *in situ* by the reaction, at 75-130° C for 1 to 10 min, of a means I selected from among the group constituted by polyisocyanates and their mixtures with a means II selected from among the group of polyols and their mixtures, the respective amounts of means I and II being such that, before reaction, the number of free NCO groups derived from means I is substantially equal to the number of free OH groups derived from means II.

7. Thermoretractable tape according to any one of Claims 1 or 5, characterised in that it comprises in its composition

(*A*) 100 parts by weight of polycaprolactone, and

($B_1$) 5 to 50 parts by weight of a trans-polydiene selected from among the group constituted by trans-polybutadiene, trans-polyisoprene, trans-polychloroprene and their mixtures.

8. Thermoretractable tape according to any one of Claims 1 or 5, characterised in that it comprises in its composition

(*A*) 100 parts by weight of polycaprolactone, and

($B_2$) 5 to 50 parts by weight of polyurethane formed *in situ* by the reaction in polycaprolactone, at 75-130° C, for 1 to 10 min, of a least one polyisocyanate with at least one polyol under substantially stoichiometric conditions.

9. Thermoretractable tape according to any one of Claims 1 or 5, characterised in that it comprises in its composition

(*A*) 100 parts by weight of polycaprolactone, and

($B_3$) 5 to 50 parts by weight of a mixture of trans-polydiene and polyurethane formed by the reaction *in situ* at 75-130° C for 1 to 10 min of at least one polyisocyanate with at least one polyol under substantially stoichiometric conditions.

10. Thermoretractable tape according to Claim 7, characterised in that it comprises 10 to 30 parts by weight of trans-polydiene per 100 parts by weight of polycaprolactone.

11. Thermoretractable tape according to Claim 8, characterised in that it comprises 10 to 20 parts by weight of polyurethane per 100 parts by weight of polycaprolactone.

12. Thermoretractable tape according to Claim 9, characterised in that it comprises 5 to 30 parts by weight of trans-polydiene and 5 to 20 parts by weight of polyurethane per 100 parts by weight of polycaprolactone.

13. Process for the preparation of a thermoretractable tape according to any one of Claims 1 to 12, said process, which comprises the mixing of the polycaprolactone with a polymeric substance selected from among the group constituted by trans-polydiene, polyurethane and their mixture, the moulding under pressure of the resulting composition, the drawing of the resulting moulded product, then the cutting up of the drawn product so obtained, being characterised in that it comprises

1° the mixing of means (*A*) and (*B*) at a temperature comprised between 40 and 130° C, for 1 to 10 min, with stirring at an angular speed comprised between 50 and 300 rpm, the weight ratio (*A*-*B*) being comprised between 20 and 2,

2° the moulding under pressure of the resulting composition at a temperature higher than or equal to 60° C (and preferably comprised between 60 and 100° C) for 10 to 30 min, to obtain a sheet having a thickness comprised between 1 and 7 mm (and preferably between 1 and 4.5 mm), then

3° the stretching of the sheet thus obtained by 10 to 20 times its length, at a temperature comprised between 10 and 40° C (preferably between 20 and 30° C), and cutting it up.

14. Process according to Claim 13, for the preparation of a thermoplastic tape according to any one of Claims 7 or 10, characterised in that the mixture from stage 1° is employed at a temperature comprised between 40 and 120° C and preferably at a temperature comprised between 60 and 100° C.

15. Process according to Claim 13, for the preparation of a tape according to any one of Claims 8, 9, 11 or 12, characterised in that there is initiated at stage 1° the formation of the polyurethane by reacting *in situ*, at 75-130° C, for 1 to 10 min, under substantially stoichiometric conditions, a means I selected from among polyisocyanates and their mixtures, with a means II selected from among polyols and their mixtures.

16. Process according to Claim 15, characterised in that the means II is selected from among the group of polyetherpolyols obtained by the condensation of an alkylene oxide OA, such as particularly ethylene oxide and propylene oxide, with a diol such as ethyleneglycol, propyleneglycol, diethyleneglycol, hexamethyleneglycol, tetramethyleneglycol and cyclohexyl-1,4-dimethanol, a triol, a tetraol such as pentaerythritol, a pentol or a hexol such as dulcitol and sorbitol, this condensation beind carried out in the proportion of about 1 to 20 OA groups per free OH group.

17. Process according to Claim 15, characterised in that the means II is a polyetherpolyol corresponding to the general formula:

$$HO-(CH_2-CH_2-CH_2-CH_2-O)_nH$$

where n is a whole number comprised between 6 and 42.

18. Process according to Claim 15, characterised in that means I is selected from among the group constituted by 2,4-toluenediisocyanate, 2,6-toluenediisocyanate, 4,4'-diphenylmethanediisocyanate, 1,6-hexamethylenediisocyanate, 1,4-cyclohexanediisocyanate, 4,4'-dicyclohexylmethanediisocyanate, isophoronediisocyanate and their mixtures.